# EUROPEAN PATENT APPLICATION

(11) **EP 3 016 074 A1**
(43) Date of publication of application: **04.05.2016**
(21) Application number: 15178851.0
(22) Date of filing: 29.07.2015
(51) Int. Cl.: G06T 15/00, G06T 15/06

(54) **HYBRID RENDERING APPARATUS AND METHOD**

(30) Priority: 22.10.2014 KR 20140143602
(71) Applicant: Samsung Electronics Co., Ltd, Gyeonggi-do 443-742 (KR)
(72) Inventor: LEE, Wonjong, 443-803 Gyeonggi-do (KR); SHIN, Youngsam, 443-803 Gyeonggi-do (KR); HWANG, Seokjoong, 443-803 Gyeonggi-do (KR)
(74) Representative: Portch, Daniel

(57) **Abstract**

A hybrid rendering apparatus includes: a tile classification unit configured to classify a plurality of tiles included in a two-dimensional (2D) frame into first tiles and second tiles; a rendering unit comprising a first rendering unit configured to render the first tiles and the second tiles by using a first method and a second rendering unit configured to render the first tiles by using a second method; a tile fetcher configured to fetch one of the plurality of tiles, determine whether the fetched tile is a first tile or a second tile, and output the fetched tile to the rendering unit; and a power controller configured to control power of the second rendering unit according to a result of the determining.

## Description

### FIELD OF THE INVENTION

The present description relates to a hybrid rendering apparatus and method that reduce power consumption.

### BACKGROUND OF THE INVENTION

In general, 3-dimensional (3D) rendering refers to image processing in which 3D object data is synthesized into an image that is shown at a given camera viewpoint.

Examples of a rendering method include a rasterization method that generates an image by projecting a 3D object onto a screen, and a ray tracing method that generates an image by tracing the path of light that is incident along a ray traveling toward each image pixel at a camera viewpoint.

The ray tracing method may generate a high-quality image because it reflects the physical properties (reflection, refraction, transmission, etc.) of light in a rendering result. However, the ray tracing method has difficulty in high-speed rendering because it requires a relatively large number of calculations.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. According to an aspect, a hybrid rendering apparatus includes: a tile classification unit configured to classify a plurality of tiles included in a two-dimensional (2D) frame into first tiles and second tiles; a rendering unit comprising a first rendering unit configured to render at least one of the first tiles and the second tiles by using a first method and a second rendering unit configured to render the first tiles by using a second method; a tile fetcher configured to fetch one of the plurality of tiles, determine whether the fetched tile is a first tile or a second tile, and output the fetched tile to the rendering unit; and a power controller configured to control power of the second rendering unit according to a result of the determining.

In response to the fetched tile being the first tile, the power controller may turn on power of the second rendering unit, and, in response to the fetched tile being the second tile, the power controller may turn off power of the second rendering unit.

The power controller may control power of the second rendering unit based on a state of the second rendering unit.

In response to the fetched tile being the first tile, and power of the second rendering unit being turned off, the power controller may turn on power of the second rendering unit, and in response to the fetched tile being the second tile, and the second rendering unit being in an idle state, the power controller may turn off power of the second rendering unit.

The tile classification unit may generate tile data including information regarding a primitive included in each of the plurality of tiles, wherein the information regarding the primitive includes information regarding whether the primitive has the reflectivity or refraction property.

The first rendering unit may be configured to perform rendering on a primary ray of a primitive included in the at least one of the first tiles and the second tiles, and the second rendering unit may be configured to perform rendering on a secondary ray of the primitive included in the first tiles.

The rendering unit may further include a rasterizer configured to split a primitive included in the at least one of the first tiles and the second tiles into fragments, wherein the first rendering unit and the second rendering unit may be further configured to determine color values of the split fragments.

The rendering unit may further comprises a raster operation (ROP) unit configured to perform a depth test on a fragment whose color value is determined by at least one of the first rendering unit and the second rendering unit.

The tile classification unit may be further configured to calculate a work load of the first tiles, and wherein the power controller may be further configured to control the power of the second rendering unit based on the work load of the first tiles rendered by the second rendering unit.

The work load of the first tiles may be calculated based on at least one of a ratio of a number of primitives having a reflectivity or refraction property to a number of whole primitives included in the first tiles and a ratio of an area of the primitives having the reflectivity or refraction property to an area of the whole primitives.

In response to the work load of the first tiles being greater than a threshold value, the power controller may control at least one of a voltage and a frequency applied to the second rendering unit to be a first voltage or a first frequency, and, in response to the work load of the first tile being lesser than the threshold value, may control the at least one of the voltage and the frequency applied to the second rendering unit to be a second voltage or a second frequency, wherein the first voltage is greater than the second voltage, and the first frequency is greater than the second frequency.

The power controller may control power of the second rendering unit based on a difference in a work load between adjacent first tiles sequentially rendered by the second rendering unit.

In response to an increase in the work load between adjacent first tiles, the power controller may increase at least one of a voltage and a frequency of the second rendering unit, and, in response to a decrease in the work load between adjacent first tiles, the power controller may decrease at least one of the voltage and the frequency of the second rendering unit.

According to another aspect, a hybrid rendering method includes: classifying a plurality of tiles included in a two-dimensional (2D) frame into first tiles and second tiles; fetching at least one of the plurality of tiles and determining whether the fetched tile is a first tile or a second tile; controlling power of a second rendering unit according to a result of the determining; and rendering the at least one of the first tiles and the second tiles by using a first method and rendering the first tiles by using a second method.

The controlling of the power of the second rendering unit may include: in response to the fetched tile being the first tile, turning on power of the second rendering unit, and, in response to the fetched tile being the second tile, turning off the power of the second rendering unit.

The controlling of the power of the second rendering unit may include: controlling the power of the second rendering unit based on a state of the second rendering unit.

The controlling of the power of the second rendering unit may include: in response to the fetched tile being the first tile, and the power of the second rendering unit being turned off, turning on the power of the second rendering unit, and in response to the fetched tile being the second tile, and the second rendering unit being in an idle state, turning off the power of the second rendering unit.

The classifying of the plurality of tiles may include: generating tile data including information regarding a primitive included in each of the plurality of tiles, wherein the information regarding the primitive includes information regarding whether the primitive has the reflectivity or refraction property.

The rendering of the first tiles and the second tiles may include: performing rendering on a primary ray of a primitive included in the at least one of first tiles and the second tiles by using a rasterization method, and performing rendering on a secondary ray of the primitive included in the first tiles by using a ray tracing method.

The hybrid rendering method may further include: splitting a primitive included in the at least one of the first tiles and the second tiles into fragments, and determining color values of the split fragments.

The rendering may further include: performing a depth test on a fragment whose color value is determined.

The hybrid rendering method of claim 14, further comprising: calculating a work load of the first tiles, and wherein the controlling of the power of the second rendering unit comprises: controlling power of the second rendering unit based on a work load of the first tiles rendered by the second rendering unit.

The calculating of the work load of the first tiles may be performed based on at least one of a ratio of a number of primitives having a reflectivity or refraction property to a number of whole primitives included in the first tiles and a ratio of an area of the primitives having the reflectivity or refraction property to an area of the whole primitives. The controlling of the power of the second rendering unit may further include: in response to the work load of the first tiles being greater than a threshold value, controlling at least one of a voltage and a frequency applied to the second rendering unit to be a first voltage or a first frequency, and, in response to the work load of the first tile being lesser than the threshold value, controlling the at least one of the voltage and the frequency applied to the second rendering unit to be a second voltage or a second frequency, wherein the first voltage is greater than the second voltage, and the first frequency is greater than the second frequency.

The controlling of the power to the second rendering unit may further include controlling power of the second rendering unit based on a difference in a work load between adjacent first tiles sequentially rendered by the second rendering unit.

The controlling of the power to the second rendering unit may further include: in response to an increase in the work load between adjacent first tiles, increasing at least one of a voltage and a frequency of the second rendering unit, and, in response to a decrease in the work load between adjacent first tiles, decreasing at least one of the voltage and the frequency of the second rendering unit.

Other features and aspects will be apparent from the following detailed description, the drawings, and the claims.

### BRIEF DESCRIPTION OF THE EMBODIMENTS

FIG. 1 is a diagram for explaining an example of a process of rendering a 3D image by using a rasterization method;
FIG. 2 is a diagram for explaining an example of a ray tracing method;
FIG. 3 is a block diagram illustrating an example of a structure of a hybrid rendering apparatus;
FIG. 4 is a block diagram illustrating an example of a structure of a hybrid rendering system;
FIG. 5 is a diagram for explaining tile data according to an example;
FIG. 6 is a block diagram illustrating an example of a structure of a hybrid rendering apparatus;
FIG. 7 is a flowchart for describing an example of a hybrid rendering method;
FIG. 8 is a flowchart for describing another example of a hybrid rendering method;
FIG. 9 is a diagram of first tiles and second tiles included in a secondary frame according to an example; and
FIG. 10 is a flowchart for describing another example of a hybrid rendering method.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION OF THE DRAWINGS

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness. The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

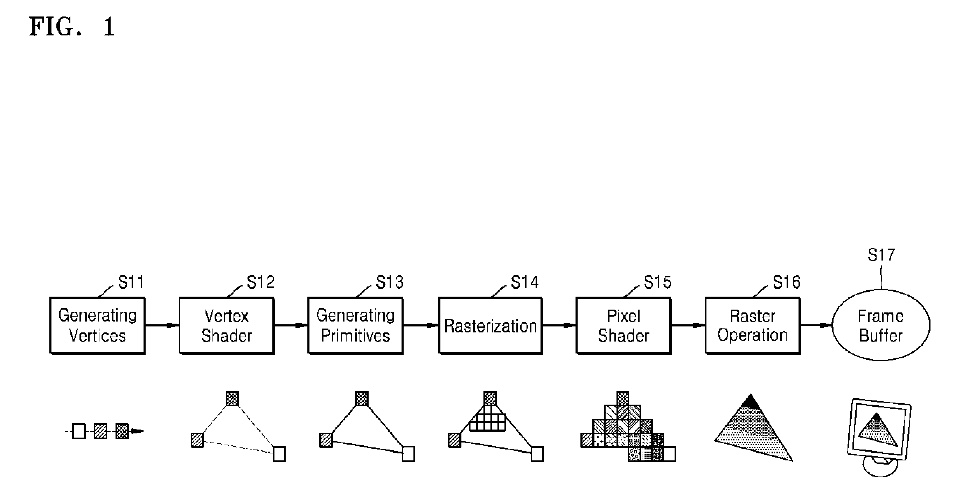

FIG. 1 is a diagram for explaining an example of a process of rendering a 3D image by using a rasterization method.

Referring to FIG. 1, the process of rendering the 3D image by using the rasterization method includes operations S11 through S17. Figures along the bottom of FIG. 1 conceptually show processing of a vertex or a pixel in each operation.

At operation S11 vertexes indicating images are generated. The vertexes are generated to indicate objects included in the images.

At operation S12 the generated vertexes are shaded. A vertex shader designates colors of the vertexes generated in operation S11 to perform shading on the vertexes. At operation S13 primitives are generated. A primitive indicates a polygon formed from a point, a line, or the vertexes. By way of example, the primitives indicate triangles formed by connecting the vertexes.

At operation S14 the primitives are rasterized. Rasterization of the primitives refers to the splitting of the primitives into a plurality of fragments. A fragment may be a unit forming a primitive and may be a basic unit for processing an image. The primitives include information regarding the vertexes. Thus, interpolation is performed when the fragments between the vertexes are generated in operation S14.

At operation S15 a pixel is shaded. Although shading is performed in a pixel unit in FIG. 1, shading may be performed in a fragment unit. For example, shading of a pixel or a fragment designates a color of the pixel or the fragment.

At operation S16 a raster operation is performed. Color blending, a depth test, etc. are performed in operation S16, thereby generating a raster image (pixels or samples) based on information regarding the shaded pixel. The generated raster image is output as a frame buffer.

At operation S17 a frame stored in a frame buffer is displayed. The frame generated in operations S11 through S16 is stored in the frame buffer. The frame stored in the frame buffer is displayed on a display apparatus.

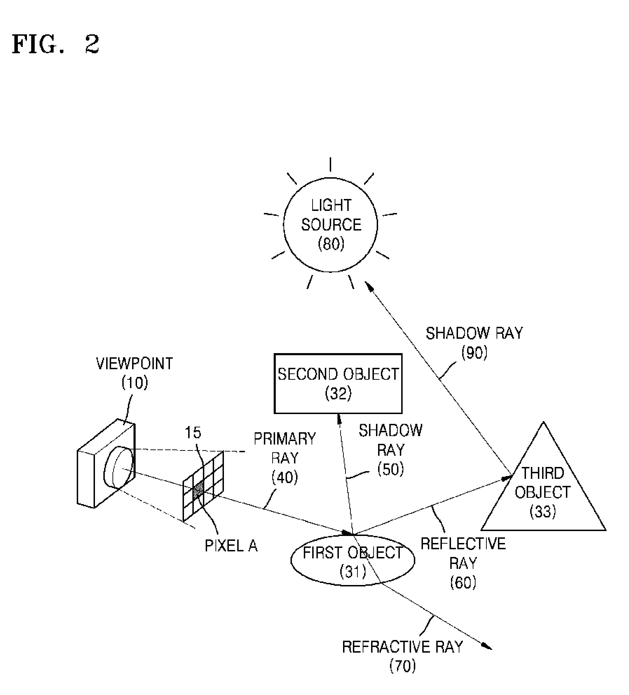

FIG. 2 is a diagram for explaining an example of a ray tracing method.

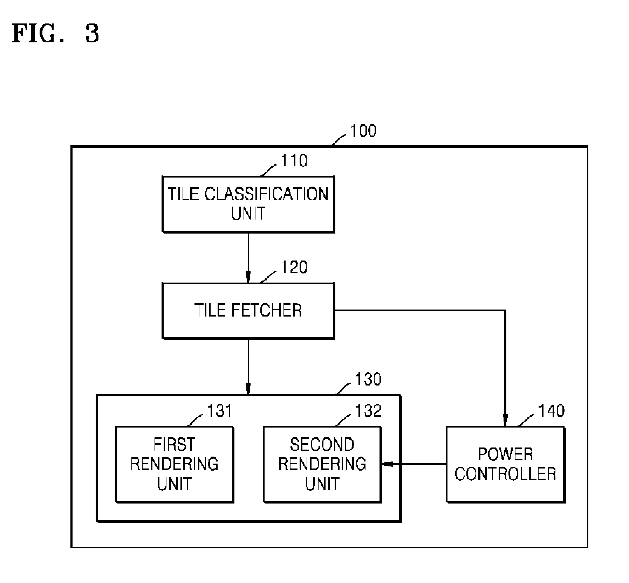

As shown in FIG. 2, 3D modeling includes a light source 80, a first object 31, a second object 32, and a third object 33. Although the first object 31, the second object 32, and the third object 33 are expressed as 2D objects, this is for convenience of description and thus not limited thereto. The first object 31, the second object 32, and the third object 33 are 3D objects.

In this example, it is assumed that the first object 31 has reflectivity and refractive indexes equal to or greater than 0, and the second object 32 and the third object 33 have reflectivity and/or refractive indexes equal to 0. That is, it is assumed that the first object 31 reflects and refracts light, and the second object 32 and the third object 33 do not reflect or refract light.

In the 3D modeling of FIG. 2, a rendering apparatus determines a viewpoint 10 for generating a 3D image and determines a screen 15 according to the determined viewpoint 10.

If the viewpoint 10 and the screen 15 are determined, the rendering apparatus generates a ray with respect to each pixel of the screen 15. For example, as shown in FIG. 2, if the screen 15 has a resolution of 4*3, the rendering apparatus generates a ray with respect to each of 12 pixels.

Herein below, a ray only with respect to a single pixel A will now be described.

Referring to FIG. 2, a primary ray 40 is generated with respect to the pixel A from the viewpoint 10. The primary ray 40 passes through a 3D space and reaches the first object 31. The first object 31 is configured as a set of a unit area (hereinafter referred to as a primitive). For example, the primitive may be a polygon such as triangle, rectangle, etc. Hereinafter, an example of the primitive that is the triangle will now be described. Meanwhile, a shadow ray 50, a reflection ray 60, and/or a refraction ray 70 are generated in a hit point of the primary ray 40 and the first object 31. In this regard, the shadow ray 50, the reflection ray 60, and/or the refraction ray 70 are secondary rays. The shadow ray 50 is generated in a direction of a light source 80 from the hit point. The reflection ray 60 is generated in a direction corresponding to an incidence angel of the primary ray 40 and receives a weight according to the reflectivity of the first object 31.

The rendering apparatus determines whether the hit point is exposed to the light source 80 through the shadow ray 50. For example, as shown in FIG. 2, if the shadow ray 50 meets the second object 32, a shadow is generated in a hit point where the shadow ray 50 is generated.

The rendering apparatus determines whether the reflection ray 60 and the refraction ray 70 reach another object. For example, as shown in FIG. 1, no object is present in a traveling direction of the refraction ray 70, and the reflection ray 60 reaches the third object 33. Thus, the rendering apparatus confirms coordinate and color information of a hit point of the third object 33 and generates a shadow ray 90 from the hit point of the third object 33. In this regard, the rendering apparatus determines whether the shadow ray 90 is exposed to the light source 80.

Meanwhile, since the reflective and refractive indexes of the third object 33 are 0, a reflection ray and a refraction ray of the third object 33 are not generated.

As described above, the rendering apparatus analyzes the primary ray 40 with respect to the pixel A and all rays derived from the primary ray 40 and determines a color value of the pixel A according to an analysis result. Determination of the color value of the pixel A is influenced whether a color of a hit point of the primary ray 40, a color of a hit point of the reflection ray 60, and the shadow ray 50 reach the light source 80.

The rendering apparatus performs the above process on all pixels of the screen 15 to form the screen 15.

FIG. 3 is a block diagram illustrating an example of a structure of a hybrid rendering apparatus 100.

Referring to FIG. 3, in accordance with one configuration, the hybrid rendering apparatus 100 includes a tile classification unit 110, a tile fetcher 120, a rendering unit 130, and a power controller 140. The rendering unit 130 includes a first rendering unit 131 and a second rendering unit 132.

The tile classification unit 110 classifies a plurality of tiles included in a 2D frame into one of first tiles and second tiles. A tile may refer to an area virtually split from the 2D frame. The tile may include a whole or a partial primitive.

The tile classification unit 110 classifies the tiles into one of the first tiles and the second tiles based on a property of a primitive included in the tiles. In this regard, the property of the primitive may include a material characteristic such as a reflective or a refractive index. For example, when a tile includes a primitive having a reflectivity or refraction property, the tile classification unit 110 classifies the tile into the first tile, whereas, when the tile does not include the primitive having the reflectivity or refraction property, the tile classification unit 110 classifies the tile into the second tile. In this regard, for convenience of description, a tile including the primitive having the reflectivity or refraction property is the first tile, and a tile excluding the primitive having the reflectivity or refraction property is the second tile but are not limited thereto.

The tile fetcher 120 fetches at least one of the plurality of tiles classified as one of the first tiles and the second tiles and outputs the at least one tile to the rendering unit 130. The tile fetcher 120 determines whether the fetched tile is the first tile or the second tile. The rendering unit 130 includes the first rendering unit 131 and the second rendering unit 132. The first rendering unit 131 performs rendering on the first tiles and the second tiles by using a rasterization method. For example, the first rendering unit 131 performs rendering on a primary ray of a primitive (that does not have the reflectivity or refraction property) included in the first tiles and the second tiles.

The second rendering unit 132 performs rendering on the first tiles by using a ray tracing method. For example, the second rendering unit 132 performs rendering on a secondary ray of the primitive (having the reflectivity or refraction property) included in the first tiles.

The power controller 140 controls power of the second rendering unit 132 according to a result of determining whether the tile fetched by the tile fetcher 120 is the first tile or the second tile.

For example, when the tile fetched by the tile fetcher 120 is the second tile, since the second tile does not include the primitive having the reflectivity or refraction property, the rendering unit 130 performs rendering on the fetched second tile by using the rasterization method. For example, the first rendering unit 131 performs rendering on the fetched second tile by using the rasterization method, and the second rendering unit 132 does not perform rendering on the fetched second tile. Thus, when the tile fetched by the tile fetcher 120 is the second tile, the power controller 140 controls turning off power of the second rendering unit 132.

Meanwhile, when the tile fetched by the tile fetcher 120 is the first tile, since the first tile includes the primitive having the reflectivity or refraction property, the rendering unit 130 performs rendering on the fetched first tile by using the rasterization method and the ray tracing method. For example, the first rendering unit 131 performs rendering on a primary ray of the fetched first tile by using the rasterization method, and the second rendering unit 132 performs rendering on a secondary ray (ray having the reflectivity or refraction property) of the fetched first tile. Thus, when the tile fetched by the tile fetcher 120 is the first tile, the power controller 140 controls turning on power of the second rendering unit 132.

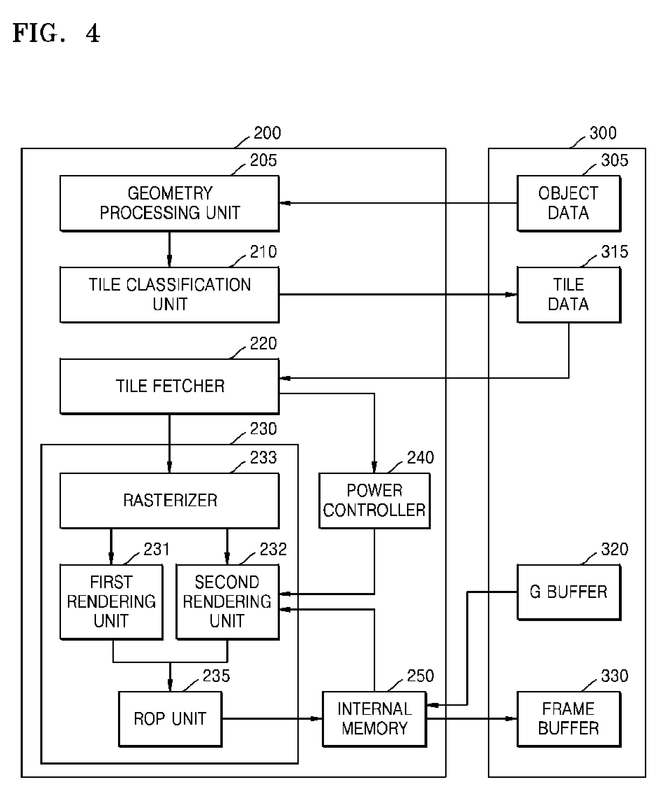

FIG. 4 is a block diagram illustrating an example of a structure of a hybrid rendering system.

Referring to FIG. 4, in accordance with one configuration, the hybrid rendering system includes a hybrid rendering apparatus 200 and an external memory 300.

The hybrid rendering apparatus 200 includes a geometry processing unit 205, a tile classification unit 210, a tile fetcher 220, a rendering unit 230, a power controller 240, and an internal memory 250. Although FIG. 4 illustrates the geometry processing unit 205, the tile classification unit 210, the tile fetcher 220, the rendering unit 230, the power controller 240 and the internal memory 250 included in the hybrid rendering apparatus 200, these components may be embodied as independent hardware. Therefore, the configuration of the hybrid rendering apparatus 200 illustrated in FIG. 4 is not limited thereto and thus the hybrid rendering apparatus 200 may include more or less components. The external memory 300 stores object data 305 and tile data 315, and includes a G buffer 320 and a frame buffer 330.

Meanwhile, the tile classification unit 210, tile fetcher 220, the rendering unit 230, and the power controller 240 of FIG. 4 may respectively correspond to the tile classification unit 110, tile fetcher 120, the rendering unit 130, and the power controller 140 of FIG. 3. Referring to FIG. 4, the geometry processing unit 205 generates vertexes by using the object data 305 stored in the external memory 300. The geometry processing unit 205 generates primitives included in an object by using the vertexes. The geometry processing unit 205 outputs information regarding the primitives to the tile classification unit 210.

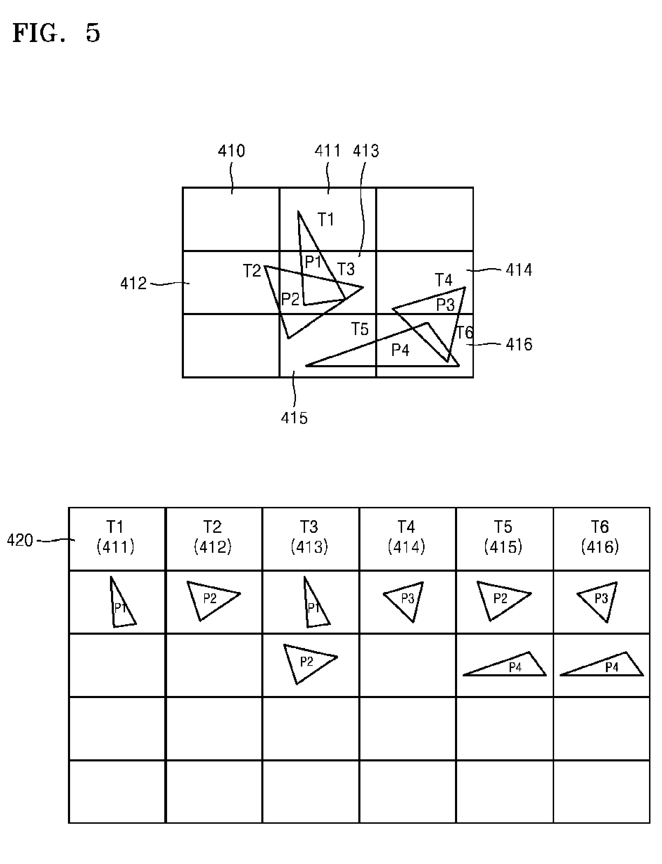

The tile classification unit 210 determines which tile of a plurality of tiles included in a 2D frame includes the primitives based on the information regarding the primitives (tile binning). For example, in one configuration, as shown in FIG. 5, a frame 410 includes 9 tiles of which 6 tiles 411, 412, 413, 414, 415, and 416 include at least one primitive. Referring to FIG. 5, a first primitive P1 is included in the tile T1 411 and the tile T3 413, and a second primitive P2 is included in the tile T2 412, the tile T3 413, and the tile T5 415. A third primitive P3 is included in the tile T4 414 and the tile T6 416, and a fourth primitive P4 is included in the tile T5 415 and the tile T6 416. The tile classification unit 210, as described above, determines which tile of the plurality of tiles includes the primitives, and, as shown in FIG. 5, generates a tile list 420 including information regarding a primitive included in each tile. The tile list 420 includes primitive property information regarding whether the primitives included in the tile have a reflectivity or refraction property.

The tile classification unit 210 calculates a number of whole primitives included in a first tile, a number of primitives having the reflectivity or refraction property, an area of whole primitives, an area of the primitives having the reflectivity or refraction property, etc., and calculates a work load of the first tile based on the number of whole primitives included in the first tile, the number of the primitives having the reflectivity or refraction property, the area of whole primitives, and the area of the primitives having the reflectivity or refraction property. The work load of the first tile includes at least one of a ratio of the number of the primitives having the reflectivity or refraction property with respect to the number of whole primitives included in the first tile and a ratio of the area of the primitives having the reflectivity or refraction property with respect to the area of whole primitives.

The tile classification unit 210 stores the tile data 315 including the work load of the first tile or the tile list 420 in the external memory 300.

The tile fetcher 220 fetches at least one of the plurality of tiles and outputs the fetched tie to the rendering unit 230 based on the tile data 315. The tile fetcher 220 determines whether the fetched tile is the first tile or the second tile. For example, the tile fetcher 220 determines whether the fetched tile is the first tile or the second tile based on a Boolean value indicating a type of a tile included in the tile data 315.

In accordance with one configuration, the rendering unit 230 includes a rasterizer 233, a first rendering unit 231, a second rendering unit 232, and a raster operation (ROP) unit 235, and renders the tile output by the tile fetcher 220 by using a rasterization method or a ray tracing method.

The rasterizer 233 splits primitives included in the tile output by the tile fetcher 220 into fragments. The rasterizer 233 splits primitives included in the first tile and primitives included in the second tile into a plurality of fragments and outputs the split fragments to the first rendering unit 231.

The rasterizer 233 splits a primitive (a first primitive) having the reflectivity or refraction property among the primitives included in the first tile into the plurality of fragments. The rasterizer 233 outputs the split fragments to the first rendering unit 231 and the second rendering unit 232. The rasterizer 233 stores the split fragments in a buffer. The buffer outputs the stored fragments to at least one of the first rendering unit 231 and the second rendering unit 232.

The first rendering unit 231 renders the fragments included in the first tile and the fragments included in the second tile by using the rasterization method. For example, the first rendering unit 231 determines color values of the fragments included in the first tile and the fragments included in the second tile. The first rendering unit 231 performs rendering on a primary ray that does not have the reflectivity or refraction property. Further, the second rendering unit 232 performs rendering on a fragment included in the first tile and having the reflectivity or refraction property by using the ray tracing method. The second rendering unit 232 calculates a hit point (of the primary ray generated with respect to the corresponding fragment and an object) of the primary ray on the fragment by using geometry information and generates a secondary ray such as a reflection ray, a refraction ray, and a shadow ray, by using the calculated hit point.

In this regard, the geometry information necessary for rendering includes at least one of depth information, a normal vector, and position information of a primitive. The geometry information is calculated in advance and stored in the G buffer 320 included in the external memory 300. The geometry information stored in the G buffer 320 is stored in the internal memory 250 in the form of an on-chip buffer of the hybrid rendering apparatus 200 but is not limited thereto. That is, the internal memory 250 may be in the form of not only the on-chip buffer but also an SRAM or a cache memory.

The second rendering unit 232 calculates a hit point of the generated secondary ray and the object and a color of the hit point based on the geometry information. The second rendering unit 232 determines a color value of a fragment having the reflectivity or refraction property based on both a value (a color value of the primary ray with respect to the corresponding fragment) obtained by rendering the fragment by using the rasterization method and a value (a color value of the secondary ray with respect to the corresponding fragment) obtained by rendering the corresponding fragment by using the ray tracing method.

The ROP unit 235 performs a depth test on the fragments rendered by using the rasterization method and the fragments rendered by using the ray tracing method, determines a visibility order relationship of the fragments, and determines final pixel values of a plurality of pixels included in the tiles.

If the pixel values of the plurality of pixels included in the tiles are determined, the tiles are output to the frame buffer 330.

Referring to FIG. 4, the power controller 240 controls power of the second rendering unit 232 according to whether the tile fetched by the tile fetcher 220 is the first tile or the second tile. For example, when the tile fetched by the tile fetcher 220 is the first tile, the power controller 240 turns on the power (supply power to) of the second rendering unit 232, and, when the tile fetched by the tile fetcher 220 is the second tile, the power controller 240 turns off the power (block power to) of the second rendering unit 232. The power controller 240 does not turn off the power of the second rendering unit 232 when the tile fetched by the tile fetcher 220 is the second tile but the second rendering unit 232 renders fragments included in a previous tile.

In the fragment included in the first tile and having the reflectivity or refraction property, rendering on the secondary ray uses the ray tracing method, and thus the second rendering unit 232 needs to perform ray tracing rendering.

Meanwhile, in the fragment included in the second tile, since the rasterization method is only used to perform rendering, the second rendering unit 232 does not need to perform ray tracing rendering. Thus, when the tile fetched by the tile fetcher 220 is the second tile, the power controller 240 blocks the power of the second rendering unit 232.

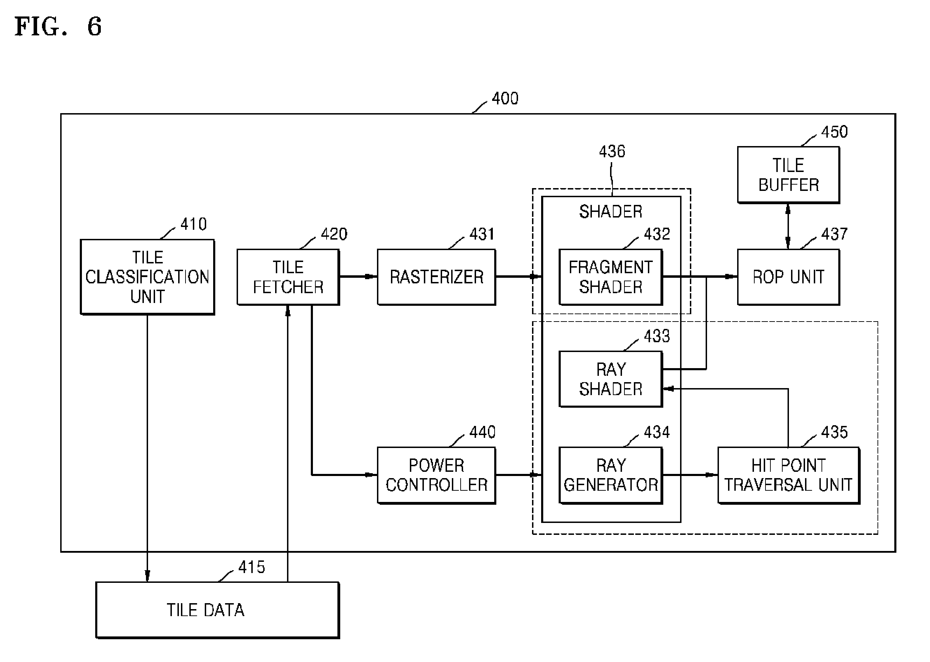

FIG. 6 is a block diagram illustrating an example of a structure of a hybrid rendering apparatus 400.

In accordance with one configuration, the hybrid rendering apparatus 400 includes a tile classification unit 410, a tile fetcher 420, a power controller 440, a rasterizer 431, a shader 436, a hit point traversal unit 435, an ROP unit 437, and a tile buffer 450. Although FIG. 6 illustrates the tile classification unit 410, the tile fetcher 420, the power controller 440, the rasterizer 431, the shader 436, the hit point traversing unit 435, the ROP unit 437 and the tile buffer 450 included in the hybrid rendering apparatus 400, the components may be embodied as independent hardware. Therefore, the hybrid rendering apparatus 400 illustrated in FIG. 6 is not limited thereto and thus may include more or less components. Further, the shader 436 includes a fragment shader 432, a ray shader 433, and a ray generator 434.

Further, the fragment shader 432 of FIG. 6 may correspond to the first rendering units 131 and 231 of FIGS. 3 and 4. The ray shader 433, the ray generator 434, and the hit point traversal unit 435 may correspond to the second rendering units 132 and 232 of FIGS. 3 and 4.

A second frame is split into virtual tiles. The tile classification unit 410 classifies a plurality of tiles into one of first tiles and second tiles. The tile classification unit 410 determines a reflectivity or refraction property of a primitive included in a tile and classifies the plurality of tiles into one of first tiles and second tiles. A first tile is a tile including a primitive having the reflectivity or refraction property. A second tile is a tile excluding the primitive having the reflectivity or refraction property.

The tile classification unit 410 calculates a number of whole primitives included in a tile, a number of primitives having the reflectivity or refraction property, an area of whole primitives, an area of the primitives having the reflectivity or refraction property, and calculates information regarding a work load of the tile based on the number of whole primitives included in the first tile, the number of the primitives having the reflectivity or refraction property, the area of whole primitives, and the area of the primitives having the reflectivity or refraction property. The work load of the tile includes at least one of a ratio of the number of the primitives having the reflectivity or refraction property with respect to the number of whole primitives included in the tile and a ratio of the area of the primitives having the reflectivity or refraction property with respect to the area of whole primitives.

In accordance with one configuration, the tile classification unit 410 stores tile data 415 including tile classification information and the work load of the tile in an external memory.

The fragment shader 432 that is an element included in a conventional rasterization based GPU apparatus may correspond to a pixel shader described with reference to FIG. 1 above. The fragment shader 432 determines a color value of a fragment. The fragment shader 432 determines a color value of a primary ray with respect to a fragment that does not consider reflectivity or refraction.

The ray generator 434 generates secondary rays with respect to a plurality of fragments. The ray generator 434 calculates a hit point (of the primary ray generated with respect to a fragment and an object) of the primary ray with respect to the corresponding fragment by using geometry information and generates a secondary ray such as a reflection ray, a refractive ray, a shadow ray, by using the calculated hit point. In this regard, the geometry information may include at least one of depth information, a normal vector, and position information, may be calculated in advance and may be stored in an internal memory of the hybrid rendering apparatus 400.

The hit point traversal unit 435 is an element included in a conventional ray tracing based GPU apparatus and may include a traversal (TRV) unit and an intersection (IST) unit. The hit point traversal unit 435 explores an acceleration structure indicating relationships between objects on a 3D space by applying a K-dimensional (KD) tree, a bounding volume hierarchy (BHV), etc., and calculates a hit point of a ray and a color value. The calculated hit point and color value are output to the ray shader 433.

The ray shader 433 determines a color value of a secondary ray with respect to the fragment based on information regarding a hit point of the secondary ray with respect to the fragment and a characteristic of a material of the hit point. The ray shader 433 determines a color value of the corresponding fragment based on the color value of the secondary ray and a color value (of the primary ray with respect to the corresponding fragment) of the corresponding fragment shaded by using a rasterization method. Thus, the ray shader 433 determines the color value of the fragment based on a basic color of the material of the hit point and an effect of ray.

The ROP unit 437 performs a depth test on the fragment rendered by using the rasterization method and the fragment rendered by using the ray tracing method and determines visibility (order) relationships of fragments. Thus, the ROP unit 437 determines final pixel values of a plurality of pixels included in a tile stored in the tile buffer 450. If the pixel values of the tile are determined, the tile is output to the frame buffer 450.

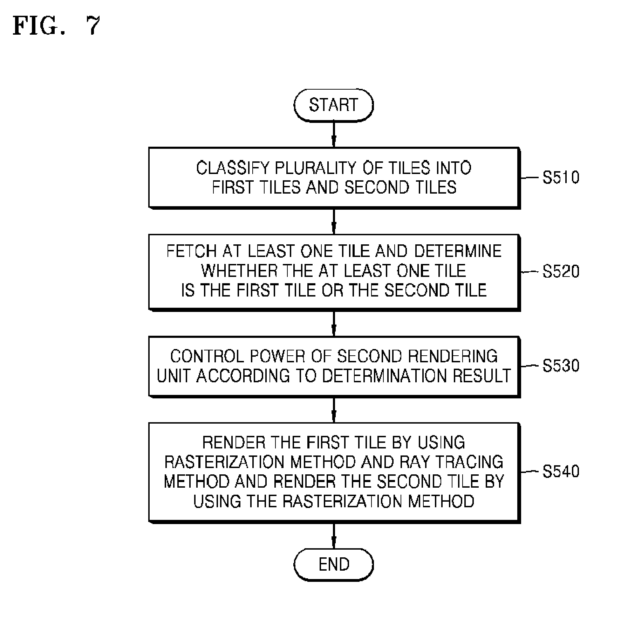

FIG. 7 is a flowchart for describing an example of a hybrid rendering method.

Referring to FIG. 7, the hybrid rendering apparatuses 100, 200, and 400 classify a plurality of tiles included in a second frame into first tiles and second tiles (operation S510).

For example, the hybrid rendering apparatuses 100, 200, and 400 classify the plurality of tiles into first tiles and second tiles according to whether a tile includes a primitive having a reflectivity or refraction property. A first tile is a tile including a primitive having the reflectivity or refraction property. A second tile is a tile excluding the primitive having the reflectivity or refraction property.

The hybrid rendering apparatuses 100, 200, and 400 fetch at least one of the plurality of tiles and determine whether the at least one tile is the first tile or the second tile (operation S520).

For example, the hybrid rendering apparatuses 100, 200, and 400 determines whether the fetched tile is the first tile or the second tile based on a Boolean value indicating a type of a tile included in tile data.

The hybrid rendering apparatuses 100, 200, and 400 controls power of a second rendering unit according to a determination result (operation S530).

The hybrid rendering apparatuses 100, 200, and 400 controls the supply of power to the second rendering unit when the fetched tile is the first tile, whereas the hybrid rendering apparatuses 100, 200, and 400 controls blocking of the power to the second rendering unit when the fetched tile is the second tile.

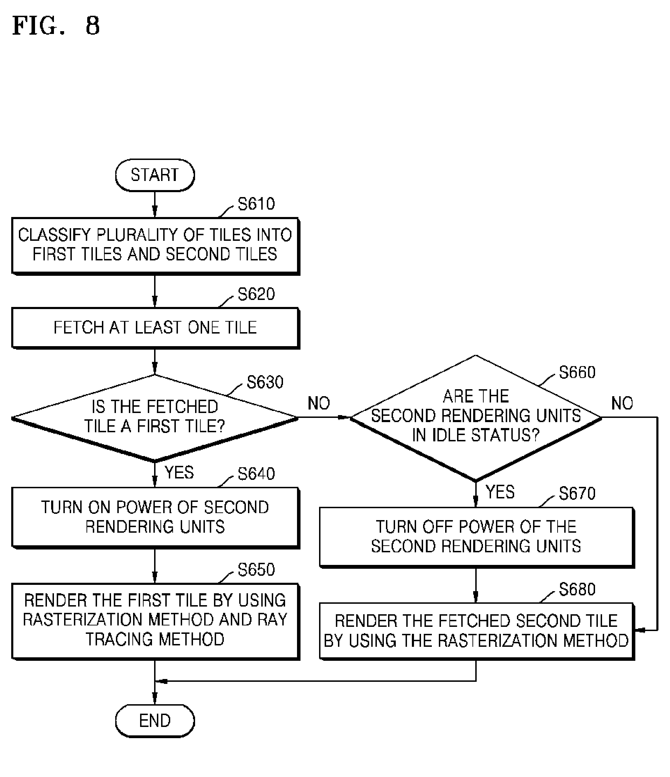

This will be described in more detail with reference to FIG. 8 later.

The hybrid rendering apparatuses 100, 200, and 400 control a power supply to the second rendering unit based on information indicating a work load of the fetched first tile when the fetched tile is the first tile. The work load of the first tile includes at least one of a ratio of a number of primitives having a reflectivity or refraction property with respect to a number of whole primitives included in the first tile and a ratio of an area of the primitives having the reflectivity or refraction property with respect to an area of whole primitives.

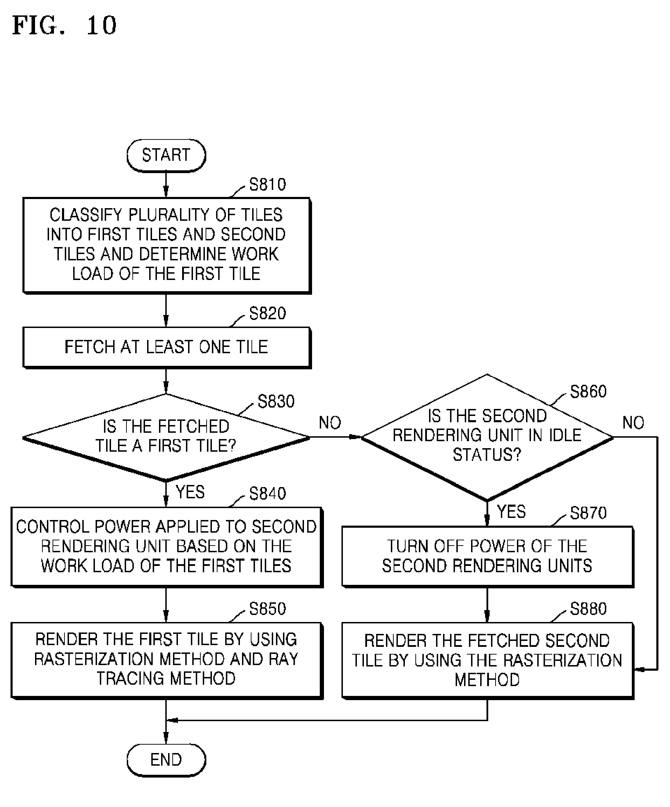

For example, in accordance with one configuration, the hybrid rendering apparatuses 100, 200, and 400 controls at least one of a voltage and a frequency applied to the second rendering unit based on the information indicating the work load of the fetched first tile. This will be described in more detail with reference to FIG. 10 later.

Further, the hybrid rendering apparatuses 100, 200, and 400 render a primitive included in the first tile by using at least one of a rasterization method and a ray tracing method and render a primitive included in the second tile by using the rasterization method (operation S540).

The hybrid rendering apparatuses 100, 200, and 400 render a fragment included in the first tile and a fragment included in the second tile by using the rasterization method. For example, the hybrid rendering apparatuses 100, 200, and 400 perform rendering on a primary ray that does not have the reflectivity or refraction property and perform rendering on a primitive that does not have the reflectivity or refraction property by using the rasterization method.

The hybrid rendering apparatuses 100, 200, and 400 render a fragment included in the first tile and having the reflectivity or refraction property by using the rasterization method. The hybrid rendering apparatuses 100, 200, and 400 calculate a hit point (of the primary ray generated with respect to the corresponding fragment and an object) of the primary ray on the fragment by using geometry information and generate a secondary ray such as a reflection ray, a refraction ray, and a shadow ray, by using the calculated hit point. The hybrid rendering apparatuses 100, 200, and 400 calculate a hit point of the generated secondary ray and the object and a color of the hit point.

The hybrid rendering apparatuses 100, 200, and 400 determine a color value of a fragment having the reflectivity or refraction property based on both a value (a color value of the primary ray with respect to the corresponding fragment) obtained by rendering the fragment by using the rasterization method and a value (a color value of the secondary ray with respect to the corresponding fragment) obtained by rendering the corresponding fragment in the second rendering unit 232 by using the ray tracing method.

FIG. 8 is a flowchart for describing an example of a hybrid rendering method.

Referring to FIG. 8, the hybrid rendering apparatuses 100, 200, and 400 classifies a plurality of tiles into first tiles and second tiles (operation S610).

The hybrid rendering apparatuses 100, 200, and 400 fetch at least one of the plurality of tiles (operation S620) and determine whether the fetched tile is a first tile (operation S630).

Operation S610 of FIG. 8 corresponds to operation S510 of FIG. 7, and operations S620 and S630 of FIG. 8 correspond to operation S520 of FIG. 7, and thus detailed descriptions thereof are omitted here.

When the fetched tile is the first tile, the hybrid rendering apparatuses 100, 200, and 400 turn on the power of the second rendering units 131 and 232 (operation S640). In this regard, when power of the second rendering units 131 and 232 are turned off, the hybrid rendering apparatuses 100, 200, and 400 turn on the power of the second rendering units 131 and 232. When power of the second rendering units 131 and 232 are turned on, the hybrid rendering apparatuses 100, 200, and 400 maintain on the power of the second rendering units 131 and 232.

The hybrid rendering apparatuses 100, 200, and 400 render the first tile by using a rasterization method and a ray tracing method (operation S650).

For example, the hybrid rendering apparatuses 100, 200, and 400 renders a primitive included in the fetched first tile and having a reflectivity or refraction property by using the rasterization method and the ray tracing method. The hybrid rendering apparatuses 100, 200, and 400 also render a primitive included in the fetched first tile and having no reflectivity or refraction property by using the rasterization method. Meanwhile, when the fetched tile is the second tile, the hybrid rendering apparatuses 100, 200, and 400 determine whether the second rendering units 131 and 232 are in an idle status (operation S660).

When the second rendering units 131 and 232 are in the idle status, the hybrid rendering apparatuses 100, 200, and 400 turn off the power of the second rendering units 131 and 232 (operation S670). When the second rendering units 131 and 232 render a fragment included in a previous tile, the hybrid rendering apparatuses 100, 200, and 400 do not turn off power of the second rendering units 131 and 232, and the second rendering units 131 and 232 completely perform rendering on the previous tile. The hybrid rendering apparatuses 100, 200, and 400 render a primitive include in the fetched second tile by using the rasterization method (operation S680).

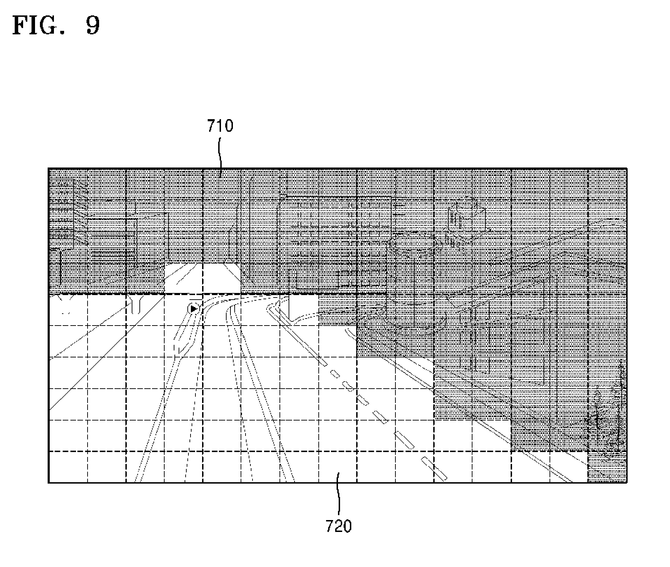

FIG. 9 is a diagram of first tiles and second tiles included in a secondary frame according to an example.

Referring to FIG. 9, the secondary frame includes a first area 710 having a reflectivity or refraction property and a second area 720 having no reflectivity or refraction property. Tiles (that are shaded) including the first area 710 are the first tiles. Tiles that are not shaded) including the second area 720 are the second tiles.

The hybrid rendering apparatuses 100, 200, and 400 do not use a ray tracing method but use a rasterization method to perform rendering on the second tiles, and thus a second rendering unit (a ray tracing rendering unit) is in an idle status. Thus, the hybrid rendering apparatuses 100, 200, and 400 turn off power of the second rendering unit, thereby reducing entire power consumption.

As shown in FIG. 9, since the first tiles are adjacent to each other ( spatial locality), when a plurality of tiles included in the secondary frame are sequentially processed in a row direction or in a column direction, switching of turning on or off power of the second rendering units 132 and 232 do not frequently occur. Thus, switching for controlling power of the second rendering units 132 and 232 does not require great power consumption.

FIG. 10 is a flowchart for describing an example of a hybrid rendering method. Referring to FIG. 10, the hybrid rendering apparatuses 100, 200, and 400 classify a plurality of tiles into first tiles and second tiles and determine a work load of a first tile (operation S810).

In accordance with one configuration, the hybrid rendering apparatuses 100, 200, and 400 calculate a number of whole primitives included in the first tile, a number of primitives having a reflectivity or refraction property, an area of whole primitives, and an area of the primitives having the reflectivity or refraction property. The hybrid rendering apparatuses 100, 200, and 400 further calculate the work load of the first tile based on the number of whole primitives included in the first tile, the number of the primitives having the reflectivity or refraction property, the area of whole primitives, and the area of the primitives having the reflectivity or refraction property. Further, the work load of the first tile includes at least one of a ratio of the number of the primitives having the reflectivity or refraction property with respect to the number of whole primitives included in the first tile and a ratio of the area of the primitives having the reflectivity or refraction property with respect to the area of whole primitives. The hybrid rendering apparatuses 100, 200, and 400 store tile data including tile classification information and information regarding the work load of the first tile in an external memory.

The hybrid rendering apparatuses 100, 200, and 400 fetch at least one of the plurality of tiles (operation S820) and determine if the fetched tile is the first tile (operation S830). When the fetched tile is the first tile, the hybrid rendering apparatuses 100, 200, and 400 control power applied to a second rendering unit based on the work load of the first tile (operation S840).

For example, when power of the second rendering unit is in an off status, the hybrid rendering apparatuses 100, 200, and 400 turn on power of the second rendering units 132 and 232, and, when the work load of the fetched first tile is greater than a threshold value, the hybrid rendering apparatuses 100, 200, and 400 control at least one of a voltage and a frequency applied to the rendering units 132 and 232 to a first voltage or a first frequency. Alternatively, when the work load of the fetched first tile is smaller than the threshold value, the hybrid rendering apparatuses 100, 200, and 400 control at least one of the voltage and the frequency applied to the rendering units 132 and 232 to a second voltage or a second frequency. In this regard, the first voltage is higher than the second voltage, and the first frequency is higher than the second frequency but the example is not limited thereto.

Alternatively, the hybrid rendering apparatuses 100, 200, and 400 control power of the second rendering units 132 and 232 based on a difference in the work load between adjacent first tiles sequentially rendered by the second rendering units 132 and 232. For example, when the work load between adjacent first tiles sequentially rendered by the second rendering units 132 and 232 increases, the hybrid rendering apparatuses 100, 200, and 400 increase at least one of voltages and frequencies of the second rendering units 132 and 232 to increase power applied to the second rendering units 132 and 232. Alternatively, when the work load between adjacent first tiles sequentially rendered by the second rendering units 132 and 232 decreases, the hybrid rendering apparatuses 100, 200, and 400 decrease at least one of voltages and frequencies of the second rendering units 132 and 232 to decrease power applied to the second rendering units 132 and 232. However, the example is not limited thereto.

Alternatively, when the difference in the work load between adjacent first tiles sequentially rendered by the second rendering units 132 and 232 is greater than a second threshold value, the hybrid rendering apparatuses 100, 200, and 400 control power applied to the second rendering units 132 and 232, and, when the difference in the work load between adjacent first tiles sequentially rendered by the second rendering units 132 and 232 is smaller than the second threshold value, the hybrid rendering apparatuses 100, 200, and 400 maintain power applied to the second rendering units 132 and 232. However, the example is not limited thereto.

The hybrid rendering apparatuses 100, 200, and 400 render the first tile by using a rasterization method and a ray tracing method (operation S850). Operation S850 of FIG. 10 corresponds to operation S650 of FIG. 8, and thus a detailed description thereof is omitted.

Meanwhile, when the fetched tile is the second tile, the hybrid rendering apparatuses 100, 200, and 400 determine whether the second rendering units 131 and 232 are in an idle status (operation S860).

When the second rendering units 131 and 232 are in the idle status, the hybrid rendering apparatuses 100, 200, and 400 turn off the power of the second rendering units 131 and 232 (operation S870). When the second rendering units 131 and 232 render a fragment included in a previous tile, the hybrid rendering apparatuses 100, 200, and 400 do not turn off the power of the second rendering units 132 and 232, and the second rendering units 131 and 232 completely perform rendering on the previous tile. The hybrid rendering apparatuses 100, 200, and 400 render a primitive included in the fetched second tile by using the rasterization method (operation S880).

As described above, according to the one or more of the above examples, a ray tracing method is used to perform rendering on a 2D ray, thereby generating a high quality image.

When ray tracing rendering is unnecessary, power of a rendering unit that performs ray tracing is blocked or an amount of the power provided to the rendering unit is reduced, thereby reducing power consumption.

The apparatuses illustrated in FIGS. 3, 4, and 6 that perform the operations described herein with respect to FIGS. 7, 8, and 10 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 3, 4 and 6. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. The methods illustrated in FIGS. 7, 8 and 10 that perform the operations described herein with respect to FIGS. 3, 4, and 6 are performed by a processor or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A hybrid rendering apparatus comprising:
a tile classification unit configured to classify a plurality of tiles included in a two-dimensional, 2D, frame into first tiles and second tiles;
a rendering unit comprising a first rendering unit configured to render at least one of the first tiles and the second tiles by using a first method and a second rendering unit configured to render the first tiles by using a second method;
a tile fetcher configured to fetch one of the plurality of tiles, determine whether the fetched tile is a first tile or a second tile, and output the fetched tile to the rendering unit; and
a power controller configured to control power of the second rendering unit according to a result of the determining.

2. The hybrid rendering apparatus of claim 1, wherein, in response to the fetched tile being the first tile, the power controller turns on power of the second rendering unit, and, in response to the fetched tile being the second tile, the power controller turns off power of the second rendering unit.

3. The hybrid rendering apparatus of claim 1 or 2, wherein the power controller controls power of the second rendering unit based on a state of the second rendering unit.

4. The hybrid rendering apparatus of claim 3, wherein
in response to the fetched tile being the first tile, and power of the second rendering unit being turned off, the power controller turns on power of the second rendering unit, and
in response to the fetched tile being the second tile, and the second rendering unit being in an idle state, the power controller turns off power of the second rendering unit.

5. The hybrid rendering apparatus of any preceding claim, wherein the tile classification unit generates tile data comprising information regarding a primitive included in each of the plurality of tiles,
wherein the information regarding the primitive included in each of the plurality of tiles comprises information regarding whether the primitive has a reflectivity or refraction property.

6. The hybrid rendering apparatus of any preceding claim,
wherein the first rendering unit is configured to perform rendering on a primary ray of a primitive included in the at least one of the first tiles and the second tiles, and
wherein the second rendering unit is configured to perform rendering on a secondary ray of the primitive included in the first tiles.

7. The hybrid rendering apparatus of any preceding claim,
wherein the tile classification unit is further configured to calculate a work load of the first tiles, and
wherein the power controller is further configured to control the power of the second rendering unit based on the work load of the first tiles rendered by the second rendering unit.

8. The hybrid rendering apparatus of claim 7, wherein the work load of the first tiles is calculated based on at least one of a ratio of a number of primitives having a reflectivity or refraction property to a number of whole primitives included in the first tiles and a ratio of an area of the primitives having the reflectivity or refraction property to an area of the whole primitives.

9. A hybrid rendering method comprising:
classifying a plurality of tiles included in a two-dimensional, 2D, frame into first tiles and second tiles;
fetching at least one of the plurality of tiles and determining whether the fetched tile is a first tile or a second tile;
controlling power of a second rendering unit according to a result of the determining; and
rendering at least one of the first tiles and the second tiles by using a first method and rendering the first tiles by using a second method.

10. The hybrid rendering method of claim 9, wherein the controlling of the power of the second rendering unit comprises: in response to the fetched tile being the first tile, turning on power of the second rendering unit, and, in response to the fetched tile being the second tile, turning off the power of the second rendering unit.

11. The hybrid rendering apparatus of claim 9 or 10, wherein the controlling of the power of the second rendering unit comprises: controlling the power of the second rendering unit based on a state of the second rendering unit, and optionally wherein the controlling of the power of the second rendering unit comprises:
in response to the fetched tile being the first tile, and the power of the second rendering unit being turned off, turning on the power of the second rendering unit, and
in response to the fetched tile being the second tile, and the second rendering unit being in an idle state, turning off the power of the second rendering unit.

12. The hybrid rendering method of any of claims 9 to 11, wherein the classifying of the plurality of tiles comprises: generating tile data comprising information regarding a primitive included in each of the plurality of tiles,
wherein the information regarding the primitive comprises information regarding whether the primitive has a reflectivity or refraction property.

13. The hybrid rendering method of any of claims 9 to 12, wherein the rendering of the first tiles and the second tiles comprises:
performing rendering on a primary ray of a primitive included in the at least one of the first tiles and the second tiles by using a rasterization method, and
performing rendering on a secondary ray of the primitive included in the first tiles by using a ray tracing method.

14. The hybrid rendering method of any of claims 9 to 13, further comprising:
calculating a work load of the first tiles, and
wherein the controlling of the power of the second rendering unit comprises:
controlling power of the second rendering unit based on a work load of the first tiles rendered by the second rendering unit.

15. A computer program comprising computer program code means adapted to perform all of the steps of any of claims 9 to 14 when said program is run on a computer.
